# EUROPEAN PATENT APPLICATION

(11) **EP 2 335 479 A1**
(43) Date of publication of application: **22.06.2011**
(21) Application number: 09813275.6
(22) Date of filing: 11.09.2009
(51) Int. Cl.: A01K 61/00, A01K 63/04

(54) **INCUBATION PROCESS FOR OCTOPUSES AND INCUBATOR**

(30) Priority: 11.09.2008 MX 2008011627
(71) Applicant: UNIVERSIDAD NACIONAL AUTONOMA DE MEXICO, Mexico 04510 D.F. (MX)
(72) Inventor: ROSAS VÁZQUEZ, Carlos, Yucatán (MX); CAAMAL MONSREAL Claudia, Yucatán (MX); CAZARES SIMENTAL, Renne Jair, Yucatán (MX)
(74) Representative: Wibbelmann, Jobst
(86) International application number: PCT/MX2009/000100
(87) International publication number: WO 2010/030155

(57) **Abstract**

An incubation process for octopuses and incubator is presented permitting large-scale management of spawning, ensuring viability of embryos and reducing the space required for management thereof. The incubation process commences when the female deposits eggs in a nest designed to promote anchorage of the eggs to the cover of the nest. Such cover is placed in an incubation system with sea-water recirculation under controlled conditions providing an environment propitious for embryonic development of the octopuses. The result obtained in laboratory trials has demonstrated that this system is as effective as that obtained when females care for the eggs, with the advantage that the artificial incubation system involves less space, less water and permits disposing of the female as a product of the cultivation system.

## Description

### TECHNICAL FIELD

An incubation process for octopuses, squids, cephalopods and similar species is presented; together with an incubator permitting large-scale management of spawning, ensuring viability of embryos and reducing the space required for management thereof.

### BACKGROUND OF THE INVENTION

In a document published by V. F. VAN HEUKELEM, in 1977 (LABORATORY MAINTENANCE, BREEDING, REARING, AND BIOMEDICAL RESEARCH POTENTIAL OF THE YUCATAN OCTOPUS (OCTOPUS MAYA) LABORATORY AND ANIMAL SCIENCE, American Association for Laboratory Animal Science, Vol 27, No. 5) the maintenance and eclosion conditions for young Octopus *maya* were presented, using a vertical incubator subjecting the eggs to a water flow coming from the conical bottom thereof. Although this incubator permits the embryonic development, it shown not to be appropriate for large-scale spawning from this species.

Other works done with different octopus species (Boby Ignatius and M. Srinivasan, 2006, Embryonic development in Octopus aegnia Gray, 1849, Current Science 91 (8): 1089-1092, have found non-effective the artificial incubation of the octopus eggs, since produces immature eggs non-surviving the eclosion. In addition, observations made with *Octopus vulgaris* shown that the embryos from this species do not properly develop by artificial incubation (Cagneta, 2000).

### BRIEF DESCRIPTION OF THE DRAWINGS

Figure 1: Nest
Figure 2: Incubator
Figure 3: Air Distribution System
Figure 4: Incubation Process
Figure 5: Incubator
Figure 6: Circulation Process
Figure 7: Water Distribution System

### DESCRIPTION OF THE INVENTION

Octopus, squid and other cephalopods or similar species limiting breeding is the embryos loss resulting from a lack of proper developing conditions. Frequently, females abandon or eat the embryos left to their care, thereby reducing the yield of the production system. Although the O. *vulgaris* females do not abandon or eat the eggs, large maintenance tanks for the reproducing containers are required, since large amounts of good-quality water are required to keep them alive.

On the other hand, it has been seen that females left on caring for the eggs use their body reserves to keep alive during the incubation, which makes them to die. Consequently, females are discarded for having lost their nutritional value.

The present invention contemplates the construction of an incubation nest (1), the incubator, and the process overcoming the drawbacks observed up to date in the development of octopuses embryos under controlled conditions.

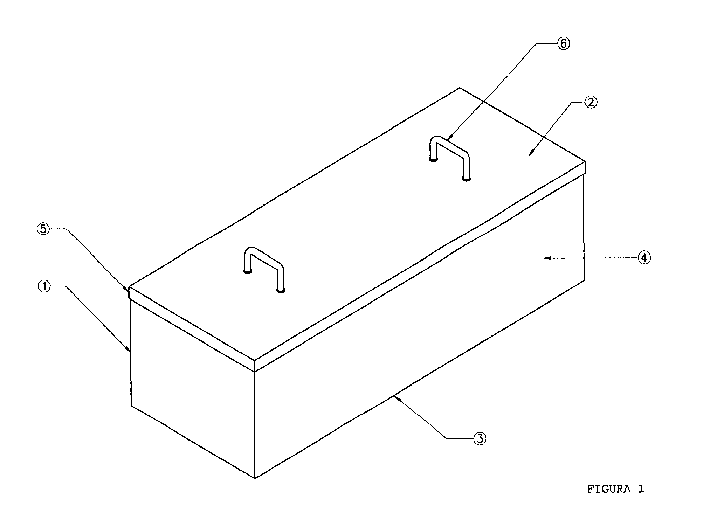

The nest (Figure 1) consists of a box having a rectangular or trapezoidal-shaped body (1) wherein the cover (2) is wider than the base and comprising a base (3), a rear wall (4) and side walls, an open front end and a sliding cover at the upper portion. The nest has channels (5) at the side walls upper portion running along the box edges wherein the cover is slidably placed. The channels are enough rigid to allow the cover sliding and support, as well as to make rigid the box structure. The nest rear wall (4) is fixed and is a stopper for the slidably cover. This wall may have holes or grooves facilitating the water circulation inside the box. The inner face of the slidably cover (2) has an irregular rough surface. The roughness deep may be a random or a defined pattern with a variable deepness from 1 to 5 mm. The box has an open end allowing the octopus to get in and out. In addition, the cover has two handles (6) to improve the management thereof.

For *Octopus Maya,* the box has the following dimensions: between 25 and 35 cm length, between 15 and 25 cm wide, and between 15 and 25 cm height. The box dimensions may vary depending on the size of the octopuses, squids, cephalopods in general, or similar species.

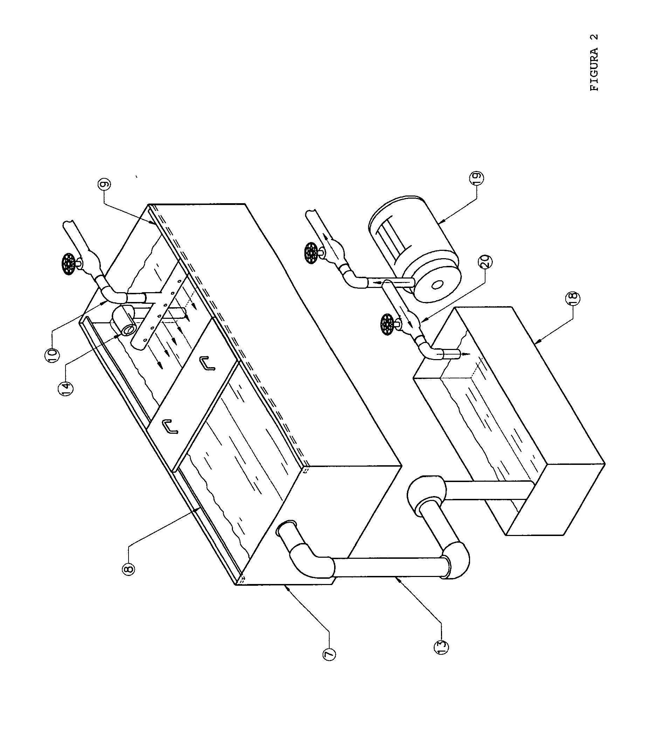

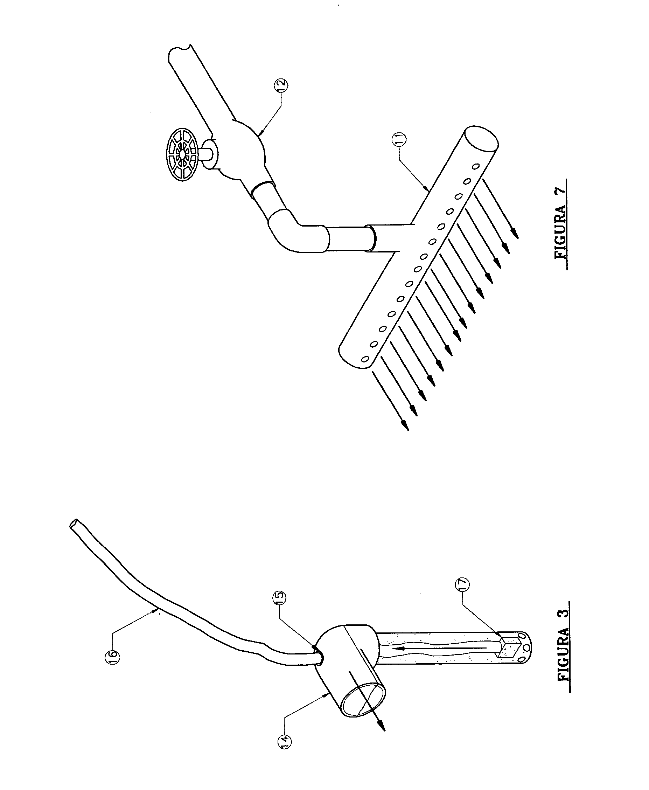

Incubator (Figure 2) consists of trapezoidal cross-section, rectangular tanks (7) having a support rim (8) at the upper edge projecting towards the box inside and receiving the nest cover. These rims have a perimetral edge (9) and in its lower portion serve as the box support element. The incubator has a sea-water feeding distributor (10). This distributor may be a holed tube, a hose, an irrigator or any other device allowing the water distribution at different positions. The water distributor may be placed at the surface or at the required height depending on the managed species. This distributor may consist of a holed tube (11) with closed ends located width-wise the incubator. At its middle portion, this tube is fed by a feeding valve regulated tube (12). The water flowing through the distributor is controlled by a stopcock (12). At the other end, it has a tube working as drainage (13), which also keeps the water level. Likewise, at the end having the water distributor, the incubator has a tube coupled to an elbow (Figure 3) (14) having a hole in the upper portion (15) to receive a hose (16) carrying a constant air flow towards a porous body (17), creating an air bubbles flow, and working as an air and water distributor element named "air lift" (Figure 3). The drainage comprises a tube located at the distributor opposite end being connected to a water collection system, carrying the water to a closed container (18), from which is pumped to a heat-exchanger, to an UV lamp and to a deep bed filter, preferably filled with anthracite (60%) and gravel (15%) (not shown), the reminder volume being empty. The collection tank has a pump (19) and a valve-controlled recirculation system preventing the pump overhead (20).

The incubation tanks have an advantageous design since they are stackable, occupying low space when stored.

### INCUBATION PROCESS

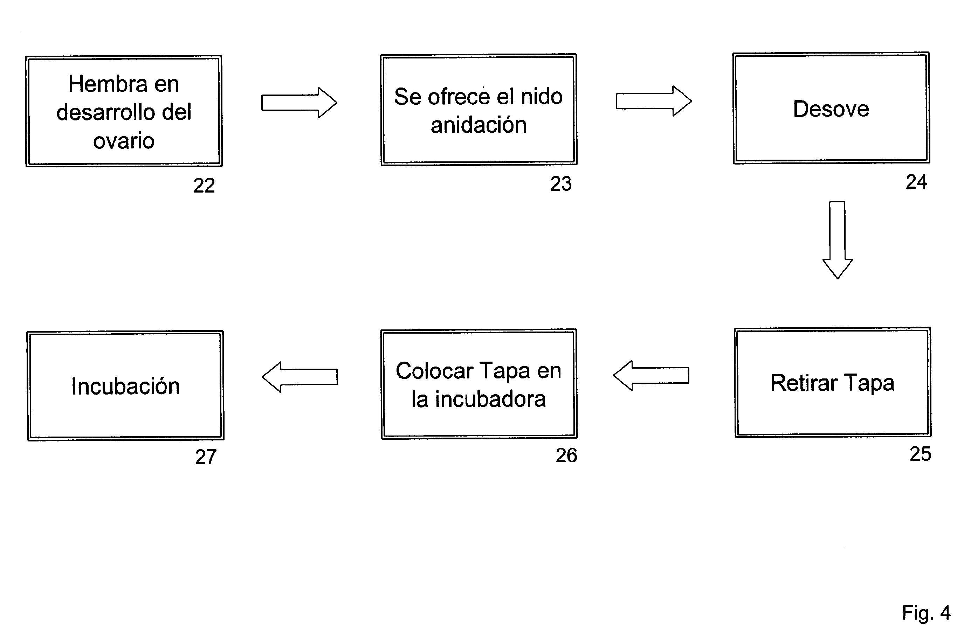

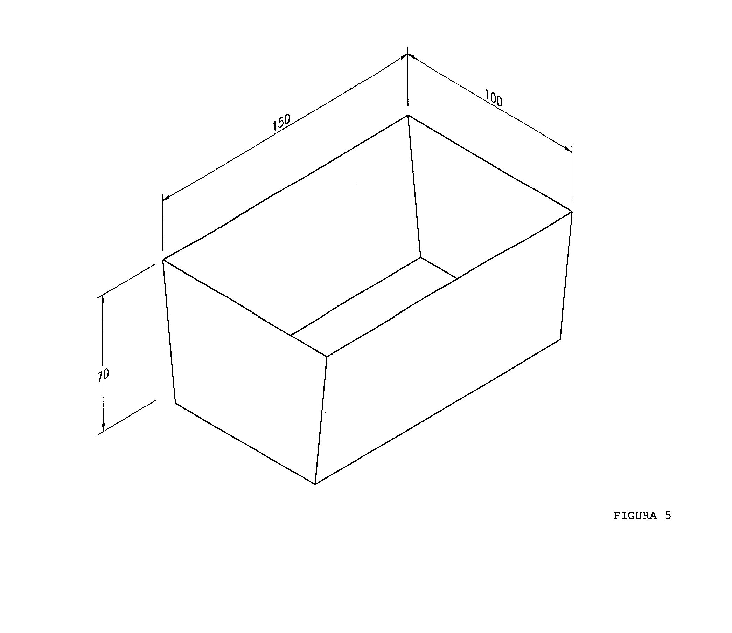

The process starts (Figure 4) when the nest (1) is offered to the ovary developing female (22) as a refugee for spawning (23). The nest (1), depending on the species, is placed on 500 L to 1000 L rectangular tanks (Figure 5) (21) having a trapezoidal cross-section. Once the female nests, deposits the eggs (24) at the inner face of the nest cover. The cover roughness promotes the anchorage of the eggs fixing structures secreted by the female. Furthermore, the process considers the use of high quality sea-water during the spawning and development. Once the spawning starts, the *Octopus maya* female takes 5 days to deposit all eggs. Once the eggs have been deposited, the cover is extracted (25) by the handles and transversally placed (26) and supported on the side rims (9) in the incubator (7) filled with water up to the rim level. The incubator conditions are set depending on the cephalopod species used. This ensures the eggs to be completely submerged in sea-water. The incubation process conditions shall be kept as stable as possible within the established ranges, avoiding variations affecting the process.

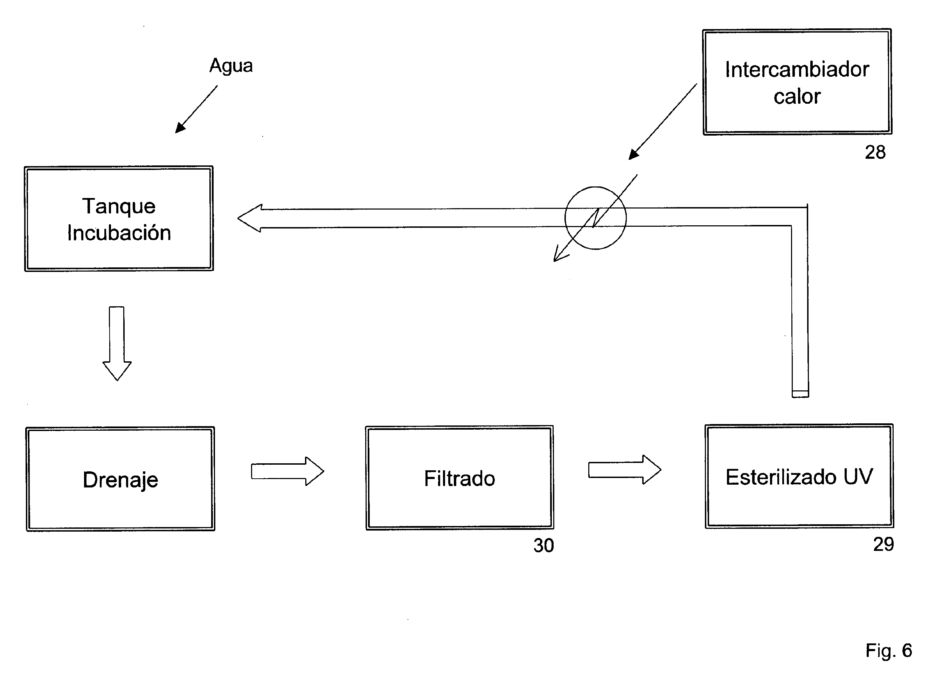

The water recirculation process (Figure 6) starts with water coming from the drainage (13), being an outer incubator tube whereby the water excess is leaked from the incubator (7). The excess water is carried to the closed tank (18) to be pumped later (19) to the heat-exchanger (28), wherein water is kept at the specified temperature. Then, the water passes through an UV lamp (29) wherein bacteria and pathogen microorganisms are killed. Finally, water is carried to a deep bed filter (30) wherein the ammonium, nitrite and nitrate 5 molecules are retained by the anthracite filter feature (3 to 5 microns). The water such treated is re-feed to the incubator. The incubation process has an approximate term of 45 to 55 days, however, this varies depending on the species; the birth ratio equals 90-94% of the total incubated eggs.

### EXAMPLES

In trials conducted to compare the incubator efficacy to the parental care of the *Octopus maya,* the young birth ratio artificially incubated observed was very similar to that when the eggs were incubated by the females. In both cases, a total of 25 spawnings were considered enough to evidence the incubator efficacy in the embryonic development process for this species, having the advantage to dispose the females as a product for commercialization once the spawning is over.

## Claims

1. A nest for the egg incubation of octopuses, squids, cephalopods and similar species, **characterized in that** comprising a box having a rectangular or trapezoidal-shaped body wherein the cover is wider than the base, and comprising a base, a rear wall and side walls, an open front end and a slidably cover at the upper portion. At the side walls upper portion, the nest has channels running along the box edges wherein the cover is slidably placed. The channels are enough rigid to allow the cover sliding and support, as well as to make rigid the box structure. The nest rear wall is fixed and is a stopper for the slidably cover. The inner face of the slidably cover has a rough surface. The roughness deep may be a random or a defined pattern with a variable deepness. The box has an open end allowing the octopus to get in and out. In addition, the cover has two handles to improve the management thereof.

2. A nest for the egg incubation of octopuses according to claim 1, **characterized in that** the rear wall may have holes or grooves to facilitate the water circulation inside the box.

3. A nest for egg incubation of octopuses according to claim 1, **characterized in that** the cover roughness deep is variable from 1 to 80 mm.

4. A nest for egg incubation of octopuses according to claims 1 and 3, **characterized in that** the roughness is a defined or a random pattern.

5. A nest for egg incubation of octopuses according to claim 1, **characterized in that** the box dimensions may change depending on size of the octopuses, squids, cephalopods or similar species.

6. An incubator for octopus eggs, **characterized in that** comprising a rectangular tank having a trapezoidal cross-section, having at its upper edge a support rim projecting towards the box outside and receiving the nest cover. The rims have a perimetral edge and at its lower portions serves as a box support element. The incubator has in one end a sea-water feeding distributor. The water flowing through the distributor is controlled by a stopcock. At the other end, it has a tube working as drainage, also functioning to keep the water level. Likewise, at the end having the water distributor, the incubator has a tube coupled to a 90 degrees elbow, which has a hole in the upper portion to receive a hose carrying a constant air flow towards a porous body creating an air bubbles flow, and working as an air and water distributor element named "air lift". The drainage consists of a tube located at the distributor opposite end being connected to a water collection system carrying the water to a closed container, from which is pumped to a heat-exchanger, to an UV lamp and to a deep bed filter, preferably filled with anthracite (60%) and gravel (15%), the reminder volume being empty. The collection tank has a pump and a valve-controlled recirculation system preventing the pump overhead.

7. An incubator for octopus eggs according to claim 6, **characterized in that** comprising a distributor placed at different positions depending on the species, such that a liquid flow is supplied. This distributor may consist of an end closed holed tube placed width-wise the incubator, a hose, an irrigator or device for water distribution.

8. An incubator for octopus eggs according to claims 6 and 7, wherein the "air lift" height is determined by the water-column height.

9. An egg incubation process for octopus, squid, cephalopod or similar species, **characterized in that** the process starts when the nest is offered to the ovary developing female as a refugee for spawning. The nest is placed on 500 L to 1000 L rectangular, black tanks having a trapezoidal cross-section, once the female nests, deposits the eggs. Once the eggs have been deposited, the cover is extracted by the handles and transversally placed and supported on the side rims in the incubator filled with water up to the rim level, permitting the eggs to be completely submerged in sea-water. Then, a water flow is created in the incubator by the distributor. The excess water is carried to the closed tank to be pumped later to the heat-exchanger. Further, the water is passed through an UV lamp wherein bacteria and pathogen microorganisms are killed. Finally, the water is carried to the deep bed filter wherein the ammonium, nitrite and nitrate molecules are retained by the anthracite filtering feature (3 to 5 microns). The treated water is re-feed to the incubator.

10. An egg incubation process for octopus, squid, cephalopod or similar species according to claim 9, **characterized in that** the temperature may be adjusted according the each species biologic requirements.

11. An egg incubation process for octopus, squid, cephalopod or similar species with a nest according to claims 1 to 5.

12. An egg incubation process for octopus, squid, cephalopod or similar species with an incubator according to claims 6 and 7.
